# EUROPÄISCHE PATENTSCHRIFT

(11) **EP 4 114 231 B1**
(45) Veröffentlichungstag und Bekanntmachung des Hinweises auf die Patenterteilung: **03.04.2024**
(21) Anmeldenummer: 21710390.2
(22) Anmeldetag: 25.02.2021
(51) Int. Cl.: A47B 47/00, F16B 12/44, A47B 47/04, A47B 87/02

(54) **VERBINDUNGSELEMENT**
CONNECTING ELEMENT
ÉLÉMENT DE RACCORDEMENT

(30) Priorität: 03.03.2020 AT 522020; 25.09.2020 AT 508152020
(43) Veröffentlichungstag der Anmeldung: 11.01.2023
(73) Patentinhaber: Kals, Karl, 8111 Gratwein/Straßengel (AT)
(72) Erfinder: Kals, Karl, 8111 Gratwein/Straßengel (AT)
(74) Vertreter: Haas, Stephan
(86) Internationale Anmeldenummer: PCT/AT2021/060063
(87) Internationale Veröffentlichungsnummer: WO 2021/174270

(56) Entgegenhaltungen:
- EP-A1- 3 104 744
- DE-A1- 2 059 870
- DE-U1- 20 312 800
- DE-U1- 29 519 642
- DE-U1-202005 003 327
- FR-A1- 2 325 840
- FR-A1- 2 343 151
- US-A- 3 841 726
- US-A- 4 652 170

## Beschreibung

Die Erfindung betrifft ein Verbindungselement für Trennelemente, insbesondere in Laden, umfassend eine Basisplatte, zumindest ein erstes Aufnahmeelement sowie zumindest ein zweites Aufnahmeelement, wobei die Basisplatte mit dem ersten Aufnahmeelement und dem zweiten Aufnahmeelement verbunden ist, wobei das erste Aufnahmeelement und das zweite Aufnahmeelement jeweils eine erste Leiste und eine zweite Leiste aufweisen, die zur Basisplatte jeweils im Wesentlichen senkrecht angeordnet sind, wobei die erste und die zweite Leiste des ersten Aufnahmeelements sowie die Basisplatte eine erste Aufnahmenut begrenzen, die zur Aufnahme eines Trennelements ausgebildet ist, und die erste und die zweite Leiste des zweiten Aufnahmeelements sowie die Basisplatte eine zweite Aufnahmenut begrenzen, die zur Aufnahme eines Trennelements ausgebildet ist, wobei die Achse der ersten Aufnahmenut und die Achse der zweiten Aufnahmenut einen Winkel von ca. 90° einschließen.

Aus dem Stand der Technik sind viele Möglichkeiten bekannt, um eine Lade, bspw. eine Schublade, ein Regalfach oder einen anderen Bereich einzuteilen, sodass separate, voneinander getrennte Abteilungen geschaffen werden, welche zur Aufnahme unterschiedlicher Gegenstände, bspw. Besteck oder Werkzeug genutzt werden können. Üblicherweise werden vorgefertigte Elemente eingesetzt, die mehrere fest miteinander verbundene Unterteilungen aufweisen. Diese vorgefertigten Elemente werden einfach in die Lade bzw. das Fach gelegt und stellen eine Unterteilung bereit. Bei diesen Vorrichtungen besteht allerdings der Nachteil, dass sie starr sind und nicht an die Schublade angepasst werden können, sodass die Vorrichtung lediglich dann gut in die Lade passt, wenn die Abmessungen der Unterteilungselemente und der Lade genau passen. Bei einer Lade, die größer ist, ist die Schubladenunterteilung nicht ausreichend befestigt und kann sich ungewollt bewegen. Weiters bleibt hierbei Platz in der Lade ungenutzt und die Unterteilungen selbst können nicht situationsspezifisch an die persönlichen Bedürfnisse angepasst werden, bspw. wenn wenige, dafür größere Unterteilungen anstelle von vielen kleinen Unterteilungen benötigt werden.

Um diese Probleme zu lösen, sind Schubladenunterteilungen bekannt, die aus Trennelementen bestehen, die in die Lade hineingestellt oder gegen die Ladenwände gepresst werden. Die Trennelemente sind üblicherweise im Wesentlichen plattenförmig oder stabförmig ausgebildet. Die Länge der Trennelemente kann hierbei auch bei einigen bekannten Ausführungen verändert werden.

Aus dem Stand der Technik bekannte Verbindungselemente werden bspw. in den Dokumenten DE 9315767 U1, DE 19628479 A1, EP 0747603 A1, DE 2701786 A1, DE 2059870, US 4652170 A, DE 20312800 U1, FR 2325840 A1, US 3841726 A, EP 3104744 A1, DE 29519642 U1, FR 2325840 A1 und DE 202005003327 U1 beschrieben.

Nachteilig bei diesen bekannten Ausführungen ist allerdings, dass die Trennelemente nicht variabel miteinander verbunden werden können. Dadurch ist es nicht möglich, eine Lade vollständig individuell zu unterteilen, sondern es müssen bei der Gestaltung der Trennelemente stets Kompromisse gefunden werden.

Es ist daher eine Aufgabe der Erfindung, ein Verbindungselement der eingangs genannten Art bereitzustellen, welches einen möglichst modularen Aufbau einer Unterteilung, insbesondere für Laden, ermöglicht. Weiters sollen die Trennelemente relativ zueinander fest gehalten werden können.

Erfindungsgemäß ist ein Verbindungselement der eingangs genannten Art vorgesehen, wobei die zweite Leiste des ersten Aufnahmeelements und die erste Leiste des zweiten Aufnahmeelements zueinander im Wesentlichen parallele und gegenüberliegende Flächen aufweisen, die einen Spalt ausbilden.

Erfindungsgemäß ist also eine Basisplatte vorgesehen, die mit zwei Leisten eine erste Nut U-förmig begrenzt und mit zwei weiteren Leisten eine zweite Nut U-förmig begrenzt. In diesen beiden Nuten können Trennelemente aufgenommen und gehalten werden. Das gegenständliche Verbindungselement ermöglicht es hierdurch, Trennelemente flexibel in die Nuten einzubringen, um hierdurch eine variable und modulare Anordnung von Trennelementen zu ermöglichen. Bevorzugt sind die Leisten derart angeordnet, dass sie einander zumindest dann nicht berühren, wenn sich kein Trennelement in den Aufnahmenuten befindet.

Die Platte, ein Basiselement, erstreckt sich im Wesentlichen in einer Plattenebene, wobei die Dicke der Platte in Relation zu Ihrer in der Plattenebene liegenden Länge bzw. Breite klein ist. Die Platte kann bspw. in der Draufsicht im Wesentlichen quadratisch, rechteckig oder rund ausgebildet sein. Bevorzugt ist hierbei vorgesehen, dass die Platte im Wesentlichen rotationssymmetrisch ausgebildet ist, besonders bevorzugt 4-fach rotationssymmetrisch. Hierdurch kann auf einfache Art und Weise ein Verbindungselement bereitgestellt werden, welches einzelne Trennelemente im 90°, 180° oder 270° Winkel miteinander verbinden kann.

Die Leisten erstrecken sich mit Ihrer Länge von der Platte bzw. der Plattenebene weg, wobei diese Längserstreckung im Wesentlichen senkrecht zur Plattenebene angeordnet ist. Bevorzugt ist die Länge der Leisten größer als die Breite und die Tiefe der Leisten. Weiters sind die beiden Leisten eines Aufnahmeelements bevorzugt spiegelsymmetrisch aufgebaut.

Bei einer bevorzugten Ausführungsform ist vorgesehen, dass das Verbindungselement in einer Ansicht von unten im Wesentlichen rotationssymmetrisch ausgebildet ist, besonders bevorzugt 4-fach rotationssymmetrisch.

Bevorzugt ist vorgesehen, dass die erste und/oder die zweite Leiste des ersten und/oder des zweiten Aufnahmeelements federnd angeordnet ist. Bevorzugt sind alle Leisten federnd angeordnet. Die Federkraft wirkt bevorzugt im Wesentlichen parallel zur Basisplatte und in Richtung der Aufnahmenut, wodurch ein Trennelement in der Aufnahmenut durch die Federkraft der beiden die Aufnahmenut begrenzenden Leisten eingeklemmt und dadurch gehalten werden kann. Die Federkraft kann durch unterschiedliche Ausbildungen bereitgestellt werden, bspw. durch das Anordnen eines Federelements oder der Ausbildung der Leisten durch ein nachgiebiges Material.

Bevorzugt ist hierbei vorgesehen, dass die Leisten derart ausgebildet sind, dass sie ein geringes Spiel relativ zur Basisplatte in einer zur Basisplatte parallelen Ebene ermöglichen, wodurch eine Federkraft bereitgestellt ist, wenn die Leiste aus der ursprünglichen Position gedrückt wird. Bspw. kann die Leiste aus einem weichen Material wie z.B. einem Kunststoff gefertigt sein, welches eine geringe Beweglichkeit der Leiste ermöglicht. Es kann auch vorgesehen sein, dass die Leiste beweglich mit der Basisplatte verbunden ist, wodurch die Federkraft bewirkt wird.

Das erste und das zweite Aufnahmeelement weisen bevorzugt neben den beiden Leisten eine Brücke zwischen den Leisten auf, um diese miteinander zu verbinden. Hierdurch wird eine U-Form gebildet, wobei bevorzugt vorgesehen ist, dass die Brücke des Aufnahmeelements mit der Basisplatte verbunden ist bzw. mit dieser verbindbar ist. Die Brücke kann auch einstückig mit der Basisplatte ausgebildet sein.

Besonders bevorzugt ist vorgesehen, dass die beiden Leisten eines Aufnahmeelements nicht über die gesamte Höhe der Aufnahmenut durch eine Brücke miteinander verbunden sind, sondern lediglich in einem der Basisplatte zugewandten Bereich, wodurch eine parallel zu der Leistenlänge, lediglich durch die Leisten begrenzte und zur Aufnahmenut senkrecht verlaufende Nut entsteht. Das Aufnahmeelement ist hierbei auch in einer Draufsicht U-förmig ausgebildet. In diese Nut können bspw. Trennelemente, insbesondere plattenförmige Trennelemente, angeordnet werden, die höher sind als die Leisten und daher über die Basisplatte des Verbindungselements hinausragen, aber dennoch durch das Aufnahmeelement in dem vorderen, der Basisplatte abgewandten Bereich der Aufnahmenut gehalten werden können.

Weiters ist bevorzugt vorgesehen, dass die Basisplatte zumindest eine Öffnung, bspw. eine Bohrung, aufweist. Besonders bevorzugt ist eine Öffnung zentral in der Basisplatte angeordnet. Weiters können noch weitere Öffnungen, insbesondere in den Rand- bzw. Eckbereichen der Basisplatte vorgesehen sein. Die Öffnung(en) dient bzw. dienen insbesondere der Befestigung der Basisplatte (und damit des Verbindungselements), bspw. an einem Schubladen- oder Regalboden.

Bevorzugt ist vorgesehen, dass die Basisplatte einstückig ausgebildet ist. Alternativ kann die Basisplatte auch aus zwei oder mehreren Teilen gebildet sein, die miteinander verbunden, insbesondere lösbar verbunden, sind.

Bei einer bevorzugten Ausbildung ist vorgesehen, dass zumindest das erste und/oder das zweite Aufnahmeelement mit der Basisplatte lösbar verbunden ist. Hierdurch kann die Basisplatte je nach Bedarf mit einem einzelnen oder mehreren Aufnahmeelementen verbunden werden, wodurch die Einsatzfähigkeit des Verbindungselements gesteigert wird. Bevorzugt ist hierbei vorgesehen, dass die Basisplatte eine oder mehrere von der Basisplatte vorragende Laschen aufweist, welche besonders bevorzugt eine Laschennut aufweisen. Die Laschen liegen bevorzugt im Wesentlichen in der Plattenebene und sind bevorzugt dünner als ein zentraler Bereich der Basisplatte ausgebildet. Auf diese Laschen kann ein Aufnahmeelement geschoben werden, welches eine entsprechende Öffnung aufweist, die mit der Lasche zusammenwirken kann, um das Aufnahmeelemente mit der Basisplatte zu verbinden. Die Laschennut kann im verbundenen Zustand zusammengedrückt sein, wodurch eine Kraft gegen die Öffnung bereitgestellt wird, welche die Verbindung der Lasche mit dem Aufnahmeelement sichert. Das Aufnahmeelement ist hierbei bevorzugt U-förmig ausgebildet, wobei die Leisten durch eine die Öffnung aufweisende Brücke miteinander verbunden sind. Besonders bevorzugt ist die Basisplatte rechteckig oder quadratisch und weist an jeder der vier Seiten eine Lasche zur Verbindung mit einem Aufnahmeelement auf. Weiters ist bevorzugt vorgesehen, dass die Laschen einstückig mit der Basisplatte ausgebildet sind.

Alternativ kann die Basisplatte auch Öffnungen aufweisen, in welche Laschen eines oder mehrerer Aufnahmeelemente eingeschoben werden können, um diese mit der Basisplatte zu verbinden. Die Aufnahmeelemente können weiters auch alternativ oder zusätzlich mit anderen Verbindungsmitteln, bspw. Schrauben oder Magneten mit der Basisplatte verbunden werden.

Bei einer bevorzugten Ausbildung weist die Basisplatte erste Hakenelemente und das zumindest eine Aufnahmeelement in den Randbereichen zumindest ein, bevorzugt zwei vorragende zweite Hakenelemente auf, die im mit der Basisplatte verbundenen Zustand mit den entsprechenden ersten Hakenelementen der Basisplatte zusammenwirken, um ein Entfernen der Lasche bzw. des Aufnahmeelements von der Basisplatte in einer zur Basisplatte im Wesentlichen parallelen Ebene zu verhindern. Weiters ist bevorzugt vorgesehen, dass die Basisplatte ein erstes Halteelement und das Aufnahmeelement ein zweites Halteelement aufweist. Im verbundenen Zustand wirken die ersten und die zweiten Halteelemente zusammen, um eine Verbindung zwischen der Basisplatte und dem Aufnahmeelement herzustellen. Die ersten Halteelemente können bspw. als zylindrische (Spreiz-)Bolzen, die aus der Basisplatte vorragen, ausgebildet sein. Weiters sind die ersten Halteelemente bevorzugt vom Plattenrand beabstandet angeordnet. Die zweiten Halteelemente sind bevorzugt auf der Lasche eines Aufnahmeelements angeordnet und weisen bspw. eine Vertiefung auf, die mit dem ersten Klemmelement, bspw. einem Bolzen, im verbundenen Zustand zusammenwirkt. Das erste und das zweite Halteelement können hierbei in Form einer Klemmverbindung zusammenwirken oder lediglich als Führung für das Einführen der Lasche in die Nut der Basisplatte dienen, um ein Einhaken der Hakenelemente zu erleichtern. Die Lasche ist bevorzugt in der Draufsicht abschnittsweise trapezförmig, um eine Anordnung von vier Laschen in bzw. auf der Basisplatte zu ermöglichen.

Die zweiten Hakenelemente sind bspw. durch in Ecken der, bevorzugt in der Draufsicht im Wesentlichen rechteckigen bzw. quadratischen, Platte angeordnete Eckelemente, die bspw. eine Nut aufweisen, in die die ersten Hakenelemente im verbundenen Zustand jeweils eingreifen, ausgebildet.

Bevorzugt weist die Basisplatte eine Grundplatte sowie eine Deckplatte auf, die miteinander lösbar verbindbar sind. Beispielsweise weist die Grundplatte eine zentrale Öffnung und die Deckplatte einen zentralen, vorragenden Bolzen auf, wobei der Bolzen im verbundenen Zustand in die Öffnung ragt und bspw. kraftschlüssig in dieser gehalten wird. Die Grundplatte und die Deckplatte weisen bevorzugt in der Draufsicht im Wesentlichen die gleiche Größe auf.

Bevorzugt sind die ersten Klemmelemente und die ersten Hakenelemente auf der Grundplatte ausgebildet. Durch ein Verbinden der Grundplatte mit der Deckplatte wird eine sichere, formschlüssige Verbindung der Basisplatte mit dem Aufnahmeelement geschaffen, indem ein (zerstörungsfreies) Lösen der Lasche von der Basisplatte in der Plattenebene mithilfe der Hakenelemente verhindert wird, während ein (zerstörungsfreies) Lösen der Lasche in einer anderen Ebene durch die Grundplatte bzw. die Deckplatte verhindert wird.

Bevorzugt ist vorgesehen, dass die erste Leiste und/oder die zweite Leiste des ersten und/oder des zweiten Aufnahmeelements eine Verbindungsnut aufweist. Die Verbindungsnut ist hierbei in der die erste bzw. die zweite Aufnahmenut begrenzende Seite der Leiste angeordnet und bevorzugt kreissegmentförmig oder rechteckig bzw. quadratisch ausgebildet. Diese Verbindungsnut dient insbesondere zum Halten eines Trennelements, bspw. eines Stabes innerhalb der Aufnahmenut. Um ein festes Halten des Trennelements zu ermöglichen, ist besonders bevorzugt vorgesehen, dass zwei eine Aufnahmenut begrenzende Leisten in den die Aufnahmenut begrenzenden Seiten einander gegenüberliegende und bevorzugt im Wesentlichen gegengleich ausgebildete Verbindungsnuten aufweisen. Hierdurch kann bspw. ein stabförmiges Trennelement beidseitig formschlüssig in der Aufnahmenut gehalten werden, wobei die Höhe des Trennelements, also der Abstand von der Basisplatte, durch den Abstand der Verbindungsnut(en) von der Basisplatte bestimmt wird. Bevorzugt weist ein Aufnahmeelement mehr als eine Verbindungsnut auf. Die Achse der Verbindungsnut(en) verläuft bevorzugt im Wesentlichen parallel zur Basisplatte.

Weiters ist bevorzugt vorgesehen, dass die erste und/oder die zweite Leiste des ersten und/oder des zweiten Aufnahmeelements zumindest eine Öffnung, bspw. eine Bohrung, aufweist, die bevorzugt quer zur Aufnahmenutachse angeordnet ist. Diese Öffnung kann bspw. zum Fixieren eines innerhalb der Aufnahmenut angeordneten Trennelements oder zur Gewichtsreduktion des Verbindungselements dienen.

Bei einer weiteren bevorzugten Ausbildung ist zumindest ein Abdeckelement vorgesehen, das ausgebildet ist, um in die Öffnungen der Leisten des zumindest einen Aufnahmeelements einzugreifen und diese abzudecken. Das Abdeckelement ist hierbei bevorzugt in der Draufsicht im Wesentlichen rechteckig ausgebildet, wobei die Länge bzw. Breite des Abdeckelements bevorzugt der Abmessung der abzudeckenden Leiste entsprechen. Um in die Öffnungen einzugreifen, umfasst das Abdeckelement bevorzugt einen oder mehrere Bolzen auf, die jeweils einer Öffnung zugeordnet sind. Zur leichteren Einführung in die Öffnungen weist bevorzugt jeder Bolzen einen Spitz auf.

Zur besseren Fixierung der Trennelemente im ersten bzw. zweiten Aufnahmeelement ist bevorzugt vorgesehen, dass an der Innenseite, also der der entsprechenden anderen Leiste zugewandten Seite, zumindest einer Leiste eine Erhöhung angeordnet ist, die von der Leiste vorragt. Die Erhöhung ist bevorzugt in einer Seitenansicht im Wesentlichen keilförmig ausgebildet. Durch eine solche Erhöhung wird ein punktuell erhöhter Druck auf das Trennelement ausgeübt und dadurch ein besserer Halt in der Aufnahmenut erzielt.

Um zwei Trennelemente im rechten Winkel miteinander verbinden zu können, ist erfindungsgemäß vorgesehen, dass die Achse der ersten Aufnahmenut und die Achse der zweiten Aufnahmenut einen Winkel von ca. 90° einschließen. Die Achse der Aufnahmenuten liegt in der Mitte zwischen den beiden begrenzenden Leisten und verläuft parallel zu den die Aufnahmenut begrenzenden Seiten der Leisten sowie parallel zu der Basisplatte. Durch diese Anordnung kann ein Trennelement in die erste Aufnahmenut und ein anderes Trennelement in die zweite Aufnahmenut aufgenommen werden. Hierbei stehen die beiden Trennelemente im Wesentlichen senkrecht zueinander.

Erfindungsgemäß ist vorgesehen, dass die zweite Leiste des ersten Aufnahmeelements und die erste Leiste des zweiten Aufnahmeelements zueinander im Wesentlichen parallele und gegenüberliegende Flächen aufweisen, die einen Spalt ausbilden. Die zweite Leiste des ersten Aufnahmeelements weist hierbei zumindest eine Seite auf, die im Wesentlichen parallel einer Seite der ersten Leiste des zweiten Aufnahmeelements gegenüberliegt. Bevorzugt ist der Abstand zwischen den beiden Seiten über den Verlauf der Seiten im Wesentlichen konstant und beträgt bevorzugt 0,25 mm oder größer. Hierdurch kann insbesondere ein Spiel der beiden Leisten relativ zueinander erreicht werden, wodurch auf in den beiden Aufnahmenuten angeordnete Trennelemente eine Federkraft ausgeübt wird, wenn die Trennelemente etwas größer als die Aufnahmenut sind. Der Spalt zwischen den beiden Leisten wird weiters von der Basisplatte begrenzt.

Bei einer alternativen Ausführung ist vorgesehen, dass die erste Aufnahmenut und die zweite Aufnahmenut in derselben Achse liegen. Die beiden Aufnahmenuten sind also gegenüberliegend angeordnet und bilden eine gemeinsame, nicht durchgehend durch Leisten begrenzte, Nut aus. Die beiden Aufnahmenuten bzw. die jeweiligen Leisten formen bei dieser Ausführung eine Fluchtung. Dies ermöglicht es einerseits, ein einzelnes Trennelement in den beiden gegenüberliegenden Aufnahmenuten anzuordnen, bspw. um ein weiteres Trennelement senkrecht zu diesem anzuordnen. Andererseits kann hierdurch ein ersten Trennelement in die erste Aufnahmenut und ein zweites Trennelement in die zweite Aufnahmenut aufgenommen werden, wodurch eine Verlängerung der beiden Trennelemente bereitgestellt wird. Die Nutbreiten zweier Leisten bzw. weiterer Leisten können variieren, d.h. sie sind jeweils der Materialstärke der Trennelemente angepasst.

Bevorzugt ist vorgesehen, dass ein drittes mit der Basisplatte verbundenes Aufnahmeelement vorgesehen ist, wobei die Leisten der Aufnahmeelemente sowie die Basisplatte einen in der Draufsicht T-förmigen Hohlraum begrenzen.

Bevorzugt ist hierbei vorgesehen, dass weiters ein viertes mit der Basisplatte verbundenes Aufnahmeelement vorgesehen ist, wobei die Leisten der Aufnahmeelemente sowie die Basisplatte einen in der Draufsicht kreuzförmigen Hohlraum begrenzen.

Das dritte, das vierte sowie ggf. weitere Aufnahmeelement können entsprechend dem ersten bzw. dem zweiten Aufnahmeelement wie oben beschrieben ausgebildet bzw. angeordnet sein.

Bevorzugt ist erfindungsgemäß weiters ein Set, umfassend ein Verbindungselement, bei welchem zumindest eines der Aufnahmeelemente mit der Basisplatte lösbar verbindbar ist, wobei zumindest ein weiteres, mit der Basisplatte (lösbar) verbindbares Verbindungsstück vorgesehen ist. Ein Verbindungsstück ist bevorzugt ein Winkelelement, welches an zwei Seiten mit einer Basisplatte verbindbar ist, wodurch zwei Basisplatten miteinander verbunden werden können. Zur Verbindung weist das Winkelelement bevorzugt zumindest zwei Laschen auf. Im verbundenen Zustand liegen die beiden Basisplatten bevorzugt im Wesentlichen in einer Ebene. Alternativ liegen die beiden Basisplatten im verbundenen Zustand in Ebenen, die miteinander einen Winkel, bevorzugt von ca. 90°, einschließen. Weiters kann bspw. ein Anschlusselement, welches eine, bevorzugt zentrale, Leiste aufweist, die bevorzugt Öffnungen umfasst, vorgesehen sein, welches mit einer Basisplatte verbindbar ist.

Weiters kann das Set eine Doppellasche umfassen, welche ausgebildet ist, um zwei in einer Ebene liegende Basisplatten derart miteinander zu verbinden, dass die Basisplatten einander berühren. Um zwei in unterschiedlichen, parallel zueinander verlaufenden Ebenen angeordnete Basisplatten miteinander zu verbinden, ist weiters bevorzugt ein Seitenteil vorgesehen, welches zwei parallele Laschen aufweist, die jeweils ausgebildet sind, um mit einer Basisplatte verbunden zu werden. Weiters ist bevorzugt ein Befestigungsteil vorgesehen, welches neben einer Lasche zur Verbindung mit einer Basisplatte ein Befestigungselement, bspw. ein Vakuumpad aufweist, um das Befestigungsteil und damit ggf. eine Basisplatte sowie weitere damit verbundene Elemente (lösbar) zu fixieren.

Durch derartige Zusatzelemente wird das Set flexibler und es können zusätzliche Einteilungen bspw. in einer Lade gebildet werden.

Die Erfindung wird nachfolgend anhand eines in der Zeichnung schematisch dargestellten Ausführungsbeispiels näher erläutert. In dieser zeigen Fig. 1 eine erste Ansicht eines erfindungsgemäßen Verbindungselements, Fig. 2 eine zweite Ansicht eines erfindungsgemäßen Verbindungselements, Fig. 3-6 Ansichten erfindungsgemäßer Basisplatten in vier Ausführungen, Fig. 7 eine Seitenansicht und Fig. 8 eine Unteransicht der erfindungsgemäße Basisplatte, Fig. 9 ein erfindungsgemäßes Verbindungselement in einer Draufsicht mit vier Aufnahmeelementen, Fig. 10 ein erfindungsgemäßes Verbindungselement in einer Ansicht mit vier Aufnahmeelementen von unten, Fig. 11 ein erfindungsgemäßes Verbindungselement in einer Seitenansicht, Fig. 12-16 ein erfindungsgemäßes Aufnahmeelement, Fig. 17 eine Ladeneinteilung mit verschiedenen erfindungsgemäßen Verbindungselementen, Fig. 18 und 19 eine zweite Ausführung eines erfindungsgemäßen Verbindungselements, Fig. 20 eine Grundplatte eines erfindungsgemäßen Verbindungselements, Fig. 21 eine Deckplatte eines erfindungsgemäßen Verbindungselements, Fig. 22 eine erfindungsgemäße Basisplatte, Fig. 23 eine Grundplatte mit zwei eingebundenen Aufnahmeelementen im verbundenen Zustand, Fig. 24 eine Ausführungsform eines Aufnahmeelements, Fig. 25 eine weitere Ausführungsform eines Aufnahmeelements, Fig. 26 ein Abdeckelement, Fig. 27 ein Winkelelement, Fig. 28 ein Anschlusselement, Fig. 29 eine Grundplatte im verbundenen Zustand mit drei unterschiedlichen Aufnahmeelementen bzw. Verbindungsstücken, Fig. 30 eine Doppellasche zur Verbindung zweiter Basisplatten, Fig. 31 zwei mithilfe einer Doppellasche verbundene Basisplatten, Fig. 32 ein Seitenteil zur Verbindung zweiter Basisplatten, Fig. 33 ein Befestigungsteil sowie Fig. 34 eine perspektivische Darstellung eines erfindungsgemäßen Sets.

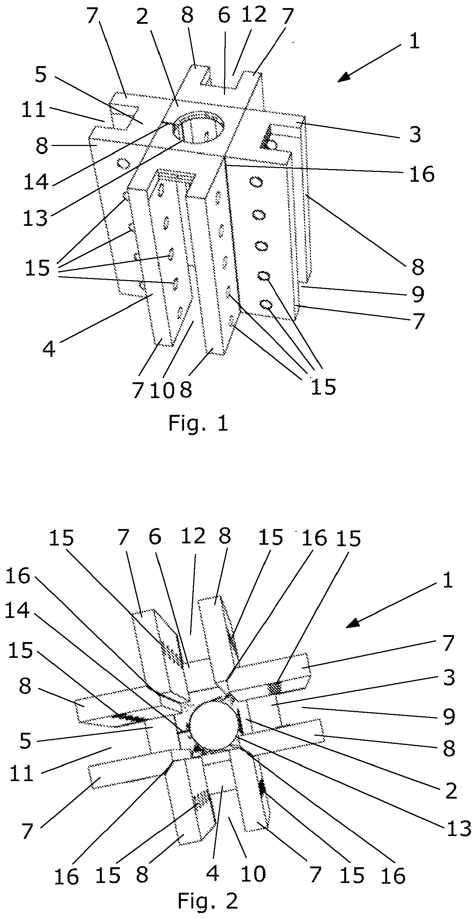

In Fig. 1 (perspektivische Ansicht von oben) und Fig. 2 (perspektivische Ansicht von unten) ist mit 1 eine erste Ausführung eines erfindungsgemäßen Verbindungselements bezeichnet. Das Verbindungselement 1 weist eine Basisplatte 2 sowie ein erstes Aufnahmeelement 3, ein zweites Aufnahmeelement 4, ein drittes Aufnahmeelement 5 sowie ein viertes Aufnahmeelement 6 auf. Die Aufnahmeelemente 3,4,5,6 weisen jeweils erste Leisten 7 sowie zweite Leisten 8 auf, die zur Basisplatte 2 jeweils im Wesentlichen senkrecht und zueinander im Wesentlichen parallel angeordnet sind. Die Leisten 7 und 8 sind jeweils über eine Brücke verbunden, die in der Draufsicht zusammen mit den Leisten 7,8 eine U-Form ausbildet. Die Leisten 7,8 des ersten Aufnahmeelements 3 bilden mit der Basisplatte 2 eine erste Aufnahmenut 9, die Leisten 7,8 des zweiten Aufnahmeelements 4 bilden mit der Basisplatte 2 eine zweite Aufnahmenut 10, die Leisten 7,8 des dritten Aufnahmeelements 5 bilden mit der Basisplatte 2 eine dritte Aufnahmenut 11 und die Leisten 7,8 des vierten Aufnahmeelements 6 bilden mit der Basisplatte 2 eine vierte Aufnahmenut 12. Durch die U-Form der Aufnahmeelemente 3,4,5,6 in der Draufsicht wird weiters eine zu den Aufnahmenuten 9,10,11,12 senkrecht stehende Nut geschaffen. Die Achsen der Aufnahmenuten 9,10,11,12 schließen jeweils einen Winkel von 90° mit der jeweils benachbarten Aufnahmenut 9,10,11,12 ein, sodass die Aufnahmenuten 9,10,11,12 einen kreuzförmigen Hohlraum (Fig. 2) ausbilden. Die Basisplatte 2 weist eine zentrale Öffnung 13 sowie eine mit der Öffnung 13 verbundene Nut 14 auf. Die Leisten 7,8 sind jeweils mit mehreren Öffnungen 15 versehen, die quer zum Verlauf der Aufnahmenuten 9,10,11,12 angeordnet sind.

Die ersten Leisten 7 und die zweiten Leisten 8 weisen jeweils zueinander im Wesentlichen parallele und gegenüberliegende Flächen auf, die einen Spalt 16 ausbilden. Die Spalte 16 verlaufen jeweils bis zur Basisplatte 2 und werden von dieser begrenzt.

In Fig. 2 ist weiters ersichtlich, dass das Verbindungselement 1 im Wesentlichen 4-fach rotationssymmetrisch ausgebildet ist.

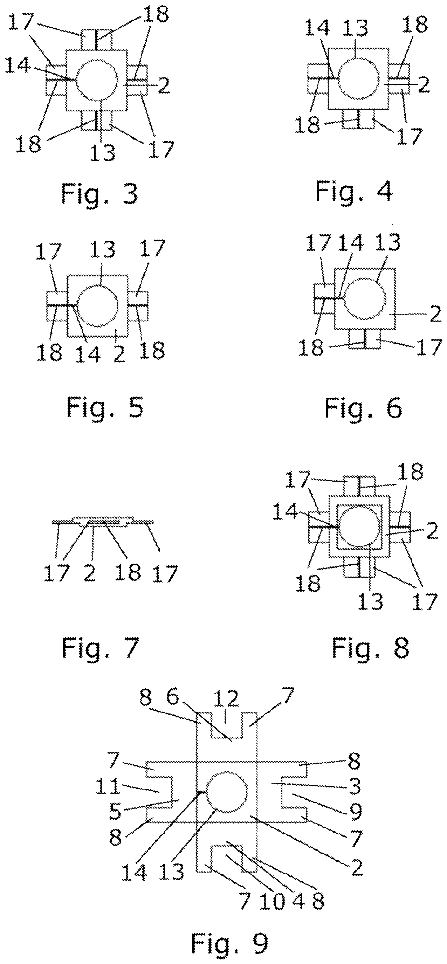

In Fig. 3 ist eine erste Ausführung einer erfindungsgemäßen Basisplatte 2 dargestellt. Die Basisplatte 2 weist eine Öffnung 13, eine durchgehende Nut 14 sowie vier Laschen 17 auf, die zur Verbindung mit Aufnahmeelementen 3,4,5,6 dienen. Jede Lasche 17 weist weiters eine Nut 18 auf.

In Fig. 4 ist eine zweite Ausführung der Basisplatte 2 dargestellt, bei welcher lediglich drei T-förmig angeordnete Laschen 17 vorgesehen sind.

In Fig. 5 ist eine dritte Ausführung der Basisplatte 2 dargestellt, bei welcher zwei Laschen 17 vorgesehen sind. Die beiden Laschen 17 liegen einander gegenüber.

In Fig. 6 ist eine vierte Ausführung der Basisplatte 2 dargestellt, bei welcher zwei Laschen 17 vorgesehen sind, die im rechten Winkel zueinander stehen.

In Fig. 7 ist eine Basisplatte 2 gemäß Fig. 3 in einer Seitenansicht dargestellt. Die Laschen 17 weisen gegenüber dem zentralen Bereich der Basisplatte 2 eine geringere Dicke auf.

In Fig. 8 ist eine Unteransicht auf eine Basisplatte 2 gemäß Fig. 3 dargestellt.

In Fig. 9 ist ein erfindungsgemäßes Verbindungselement 1 gemäß den Fig. 1 und 2 in einer Ansicht von oben dargestellt.

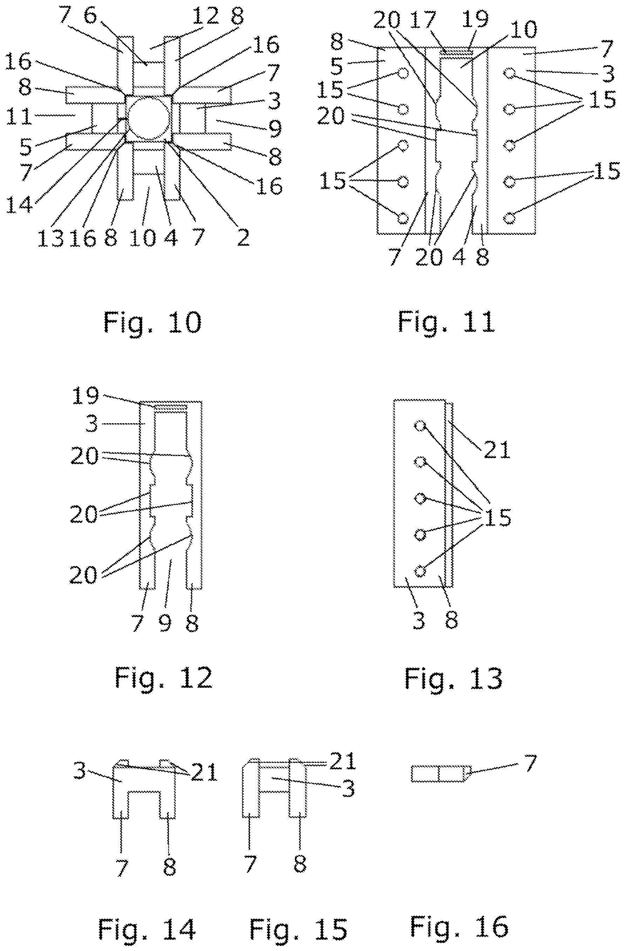

In Fig. 10 ist ein erfindungsgemäßes Verbindungselement 1 gemäß den Fig. 1 und 2 in einer Ansicht von unten dargestellt.

In Fig. 11 ist ein erfindungsgemäßes Verbindungselement 1 in einer Seitenansicht dargestellt. Mit 19 ist eine Öffnung im Aufnahmeelement 4 dargestellt, in welcher eine Lasche 17 der Basisplatte 2 angeordnet ist, um das Aufnahmeelement 4 mit der Basisplatte 2 zu verbinden. Weiters weisen die Leisten 7 und 8 des Aufnahmeelements 4 jeweils drei Verbindungsnuten 20 auf, die in den Leisten 7, 8 jeweils gegengleich angeordnet sind. Die mittlere Verbindungsnut 20 ist rechteckig, die beiden anderen Verbindungsnuten 20 sind jeweils kreissegmentförmig ausgebildet.

In Fig. 12 ist ein erfindungsgemäßes Aufnahmeelement 3 in einer Vorderansicht dargestellt. Das Aufnahmeelement 3 ist hierbei U-förmig ausgebildet.

In Fig. 13 ist ein erfindungsgemäßes Aufnahmeelement 3 in einer Seitenansicht dargestellt. Mit 21 ist eine abschrägende Fläche bezeichnet, die zusammen mit einer Fläche eines anderen Aufnahmeelements 4 einen Spalt 16 (Fig. 10) bildet.

In Fig. 14 ist ein erfindungsgemäßes Aufnahmeelement 3 in einer Draufsicht dargestellt. Insbesondere ist deutlich erkennbar, dass die beiden Leisten 7,8 durch eine Brücke miteinander verbunden sind, wobei ein Bereich zwischen den Leisten 7,8 ausgespart ist und das Aufnahmeelement 3 eine U-Form aufweist.

In Fig. 15 ist ein erfindungsgemäßes Aufnahmeelement 3 in einer Ansicht von unten dargestellt.

In Fig. 16 ist eine Leiste 7 eines Aufnahmeelements 3 in einer Profilansicht dargestellt.

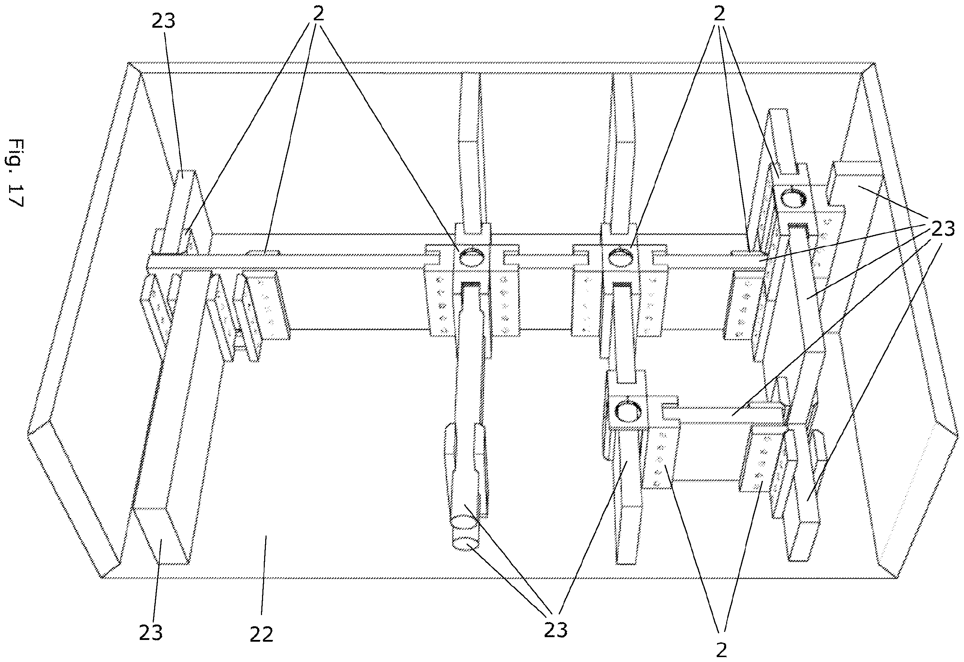

In Fig. 17 ist eine Ladeneinteilung in einer Lade 22, dargestellt, umfassend mehrere verschiedene erfindungsgemäße Verbindungselemente 2 sowie diverse Trennelemente 23, die durch die Verbindungselemente 2 relativ zueinander gehalten werden. Die Trennelemente 23 können bspw. einen rechteckigen, einen quadratischen, ovalen oder einen runden Querschnitt aufweisen.

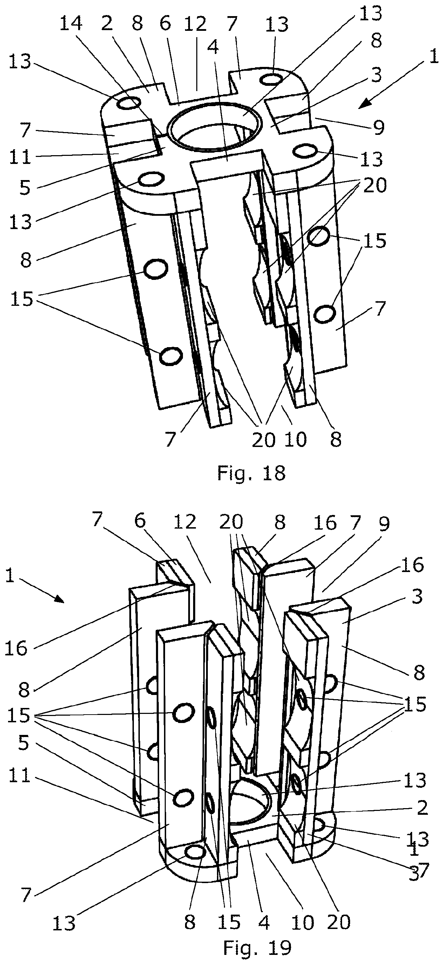

In Fig. 18 (perspektivische Ansicht von oben) und Fig. 19 (perspektivische Ansicht von unten) ist eine zweite Ausführung eines erfindungsgemäßen Verbindungselements 1 dargestellt, bei welchem die Aufnahmeelemente 3,4,5,6 fest mit der Basisplatte 2 verbunden sind. Die die beiden Leisten 7,8 verbindenden Teile der Aufnahmeelemente 3,4,5,6 sind einstückig mit der Basisplatte 2 verbunden. Die Leisten 7,8 des Verbindungselements weisen jeweils zwei einander gegenüberliegende, gegengleiche, kreissegmentförmige Verbindungsnuten 20 auf. Weiters weist die Basisplatte 2 in den Eckbereichen zusätzliche Öffnungen 13 auf.

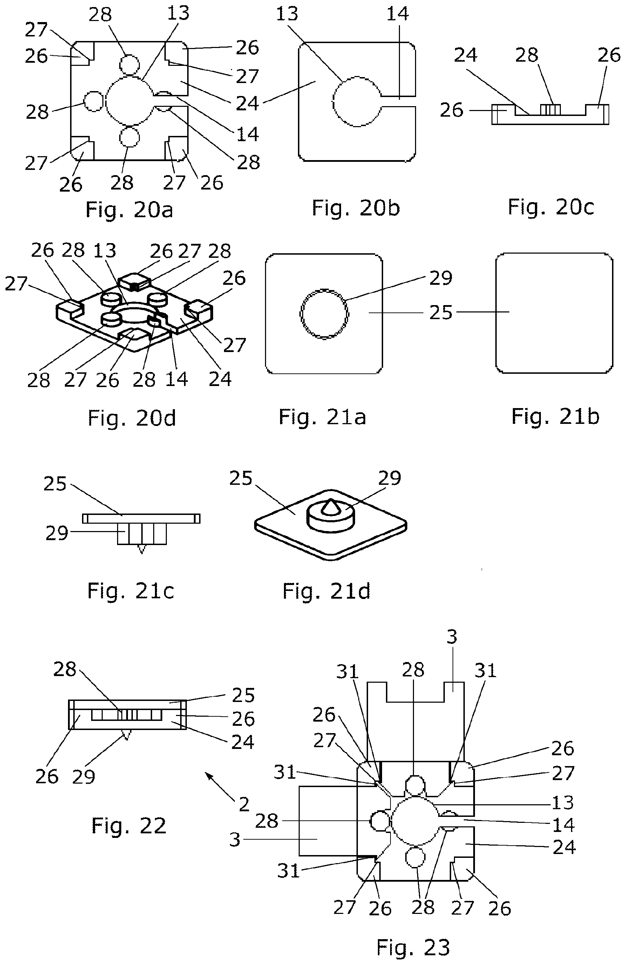

In den Fig. 20 bis 23 ist eine zweiteilige Ausführungsform einer erfindungsgemäßen Basisplatte 2 dargestellt. Die Basisplatte 2 umfasst hierbei eine Grundplatte 24 sowie eine Deckplatte 25.

In Fig. 20 ist die Grundplatte 24 in einer Ansicht von oben (Fig. 20a), einer Ansicht von unten (Fig. 20b), einer Seitenansicht (Fig. 20c) sowie einer perspektivischen Ansicht (Fig. 20d) dargestellt. Die Grundplatte 24 weist neben einer zentralen Öffnung 13 und einer Nut 14 in den Ecken jeweils ein Eckelement 26 auf, welches ein als Nut ausgebildetes erstes Hakenelement 27 umfasst. Zusätzlich sind vier als Bolzen ausgebildete erste Halteelemente 28 vorgesehen, die jeweils vom Plattenrand beabstandet angeordnet sind.

In Fig. 21 ist eine Deckplatte 25 in einer Ansicht von oben (Fig. 21a), einer Ansicht von unten (Fig. 21b), einer Seitenansicht (Fig. 21c) sowie einer perspektivischen Ansicht (Fig. 21d) dargestellt, die in der Draufsicht im Wesentlichen die gleiche Form bzw. Größe wie die Grundplatte 24 aufweist. In der Mitte der Deckplatte 25 ist ein zentraler Bolzen 29 angeordnet, der ausgebildet ist, um mit der Öffnung 13 der Grundplatte 24 zusammenzuwirken.

In Fig. 22 ist die Basisplatte 2, bestehend aus der Grundplatte 24 und der Deckplatte 25 im verbundenen Zustand gezeigt.

In Fig. 23 ist die Grundplatte 24 zusammen mit zwei Laschen 30, die jeweils Teil eines Aufnahmeelements 3,4 sind, gezeigt. Die Laschen 30 weisen eine in der Draufsicht abschnittsweise trapezförmige Form sowie zweite Hakenelemente 31 auf, die im dargestellten verbundenen Zustand in die ersten Hakenelemente 27 eingreifen und dadurch eine Verbindung zwischen der Basisplatte 2 und den Aufnahmeelementen 3,4 bereitstellen.

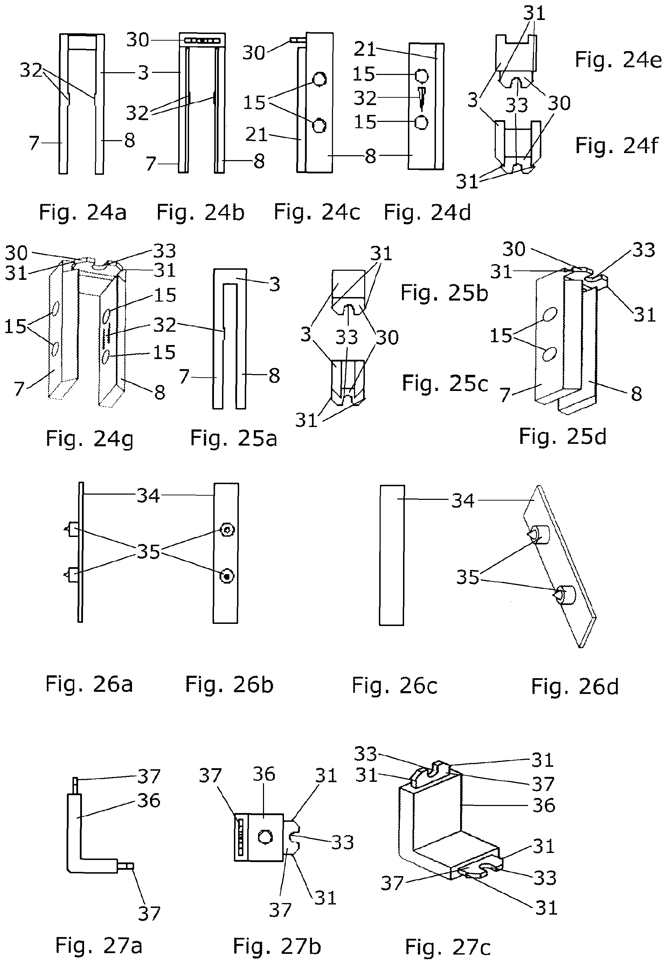

In Fig. 24 ist ein erstes, zur Verbindung mit einer Grundplatte 24 ausgebildetes, Aufnahmeelement 3 in einer Vorderansicht (Fig. 24a), einer Rückansicht (Fig. 24b), einer Seitenansicht (Fig. 24c), einer Ansicht einer Leiste von innen (Fig. 24d), einer Draufsicht (Fig. 24e), einer Ansicht von unten (Fig. 24f) sowie einer perspektivischen Ansicht (Fig. 24g) dargestellt. Das Aufnahmeelement 3 weist zwei Leisten 7,8 auf, die eine Nut bilden. Das Aufnahmeelement 3 weist eine Lasche 30 auf, die ausgebildet ist, um zwischen einer Grundplatte 24 und einer Deckplatte 25 angeordnet zu werden und damit das Aufnahmeelement 3 mit der Basisplatte 2 zu verbinden. An den einander zugewandten Seiten der Leisten 7,8 ist eine keilförmige Erhebung 32 angeordnet, die auf ein in dem Aufnahmeelement 3 angeordnetes Trennelement einen punktuellen Druck ausübt, um dieses besser in dem Aufnahmeelement 3 zu halten. Die Lasche 30 umfasst neben den zweiten Hakenelementen 31 auch als runde Vertiefungen ausgebildete zweite Halteelemente 33, die im verbundenen Zustand mit den ersten Halteelementen 28 zusammenwirken.

In Fig. 25 ist ein zweites, zur Verbindung mit einer Grundplatte 24 ausgebildetes, Aufnahmeelement 3 in einer Vorderansicht (Fig. 25a), einer Draufsicht (Fig. 25b), einer Ansicht von unten (Fig. 25c) sowie einer perspektivischen Ansicht (Fig. 25d) dargestellt. Im Unterschied zur Ausführung gemäß Fig. 24 sind die Außenkanten der beiden Leisten 7,8 bündig mit den Außenkanten der Lasche 30 sowie die Brücke mit den Leisten 7,8 bündig angeordnet.

In Fig. 26 ist ein Abdeckelement 34 zur Abdeckung von Öffnungen 15 des Aufnahmeelements 3 in einer Seitenansicht (Fig. 26a), einer Draufsicht (Fig. 26b), einer Ansicht von unten (Fig. 26c) sowie einer perspektivischen Ansicht (Fig. 26d) dargestellt. Das Abdeckelement 34 weist zwei vorragende Bolzen 35 auf, die der Verbindung mit den Öffnungen 15 dienen, um die Öffnungen 15 wahlweise abzudecken. Die Anzahl der Bolzen 35 auf dem Abdeckelement 34 entspricht der Anzahl der Öffnungen 15 der abzudeckenden Leiste. Um ein leichteres Einführen der Bolzen 34 in die Öffnungen 15 zu ermöglichen sowie Trennelemente 23 zu fixieren, weisen die Bolzen 34 jeweils einen Spitz auf.

In Fig. 27 ist ein Winkelelement 36 in einer Seitenansicht (Fig. 27a), einer Draufsicht (Fig. 27b) sowie einer perspektivischen Ansicht (Fig. 27c) dargestellt. Das Winkelelement 36 weist zwei Laschen 37 auf, die den Laschen 30 der Aufnahmeelemente 3,4 entsprechen und jeweils eine in der Draufsicht trapezförmige Form, zweite Hakenelemente 31 sowie zweite Halteelemente 33 umfassen. Die Laschen 37 sind in zwei zueinander senkrecht stehenden Ebenen angeordnet und dienen der Verbindung von zwei Basisplatten 2 miteinander.

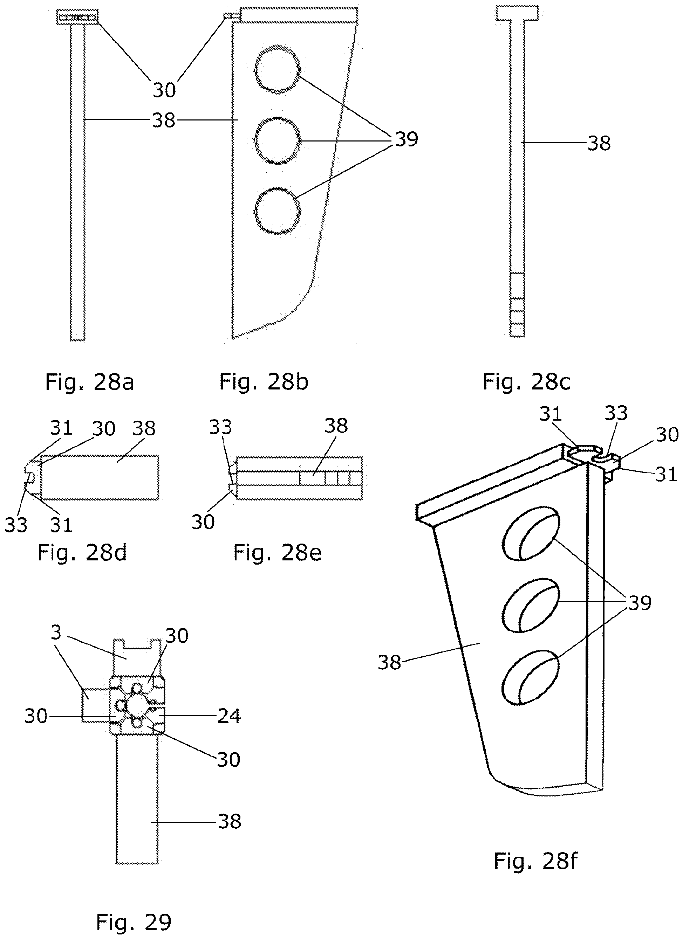

In Fig. 28 ist ein Anschlusselement 38 in einer Ansicht von hinten (Fig. 28a), einer Seitenansicht (Fig. 28b), einer Ansicht von vorne (Fig. 28c), einer Draufsicht (Fig. 28d), einer Ansicht von unten (Fig. 28e) und einer perspektivischen Ansicht (Fig. 28f) dargestellt. Das Anschlusselement 38 umfasst eine Lasche 30, die den Laschen 30 der Aufnahmeelemente 3,4 bzw. den Laschen 37 des Winkelelements 36 entspricht und eine in der Draufsicht trapezförmige Form, zweite Hakenelemente 31 sowie zweite Halteelemente 33 umfasst. Das Anschlusselement 38 kann mit einer entsprechend ausgebildeten Basisplatte 2 verbunden werden und dient bspw. als Trennelement. Weiters umfasst das Anschlusselement 38 mehrere Öffnungen 39, die bspw. zur Aufnahme von runden Trennelementen ausgebildet sind.

In Fig. 29 ist eine Grundplatte 24 gemäß Fig. 20 dargestellt, die mithilfe von Laschen 30 mit Aufnahmeelementen 3 sowie einem Anschlusselement 38 verbunden ist.

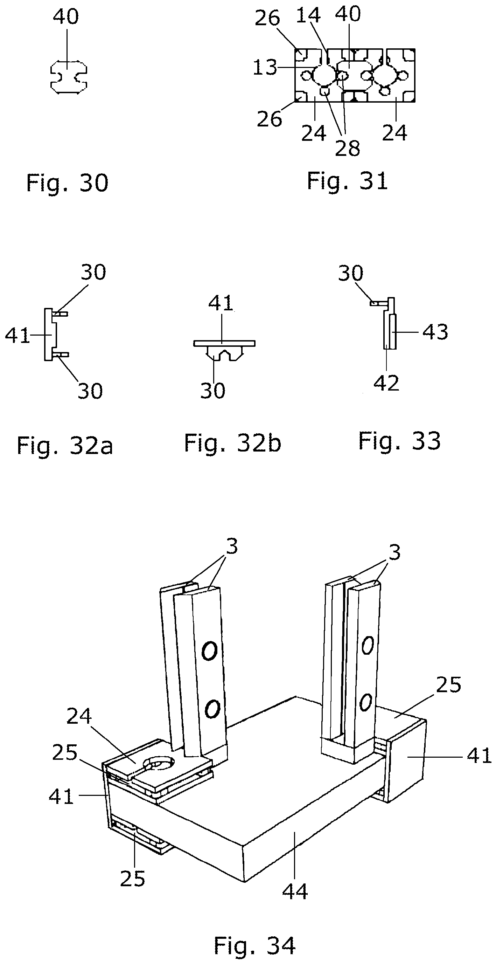

In Fig. 30 ist eine Doppellasche 40 zur Verbindung von zwei in einer Ebene angeordneten Grundplatten 24 in einer Draufsicht dargestellt.

In Fig. 31 ist eine Doppellasche 40 dargestellt, die mit zwei Grundplatten 24 verbunden ist.

In Fig. 32 ist eine Seitenansicht (Fig. 32a) sowie eine Draufsicht (Fig. 32b) eines Seitenteils 41 dargestellt. Das Seitenteil 41 umfasst zwei übereinander angeordnete Laschen 30, die zur Verbindung mit durch Grundplatten 24 und Deckplatten 25 gebildeten Basisplatten 2 vorgesehen sind. Dies ermöglicht die Verbindung von zwei Basisplatten 2 miteinander.

In Fig. 33 ist eine Seitenansicht eines Befestigungsteils 42 gezeigt, welches eine Lasche 30 und ein als Befestigungselement 43 ausgebildetes Vakuumpad aufweist. Das Befestigungselement 43 ermöglicht eine rutschhemmende Anbindung zum Korpus bzw. zu Ladenseitenteilen.

In Fig. 34 eine perspektivische Darstellung der Grundplatte 24, Deckplatte 25, Aufnahmeelementen 3 sowie Seitenteilen 42 gezeigt, die mit einer lotrechten Platte 44 verbunden sind.

## Patentansprüche

1. Verbindungselement, umfassend eine Basisplatte (2), zumindest ein erstes Aufnahmeelement (3) sowie zumindest ein zweites Aufnahmeelement (4), wobei die Basisplatte (2) mit dem ersten Aufnahmeelement (3) und dem zweiten Aufnahmeelement (4) verbunden ist, wobei das erste Aufnahmeelement (3) und das zweite Aufnahmeelement (4) jeweils eine erste Leiste (7) und eine zweite Leiste (8) aufweisen, die zur Basisplatte (2) jeweils im Wesentlichen senkrecht angeordnet sind, wobei die erste und die zweite Leiste (7,8) des ersten Aufnahmeelements (3) und die Basisplatte (2) eine erste Aufnahmenut (9) begrenzen, die zur Aufnahme eines Trennelements (22) ausgebildet ist, und die erste und die zweite Leiste (7,8) des zweiten Aufnahmeelements (4) und die Basisplatte (2) eine zweite Aufnahmenut (10) begrenzen, die zur Aufnahme eines Trennelements (22) ausgebildet ist, wobei die Achse der ersten Aufnahmenut (9) und die Achse der zweiten Aufnahmenut (10) einen Winkel von ca. 90° einschließen, **dadurch gekennzeichnet, dass** die zweite Leiste (8) des ersten Aufnahmeelements (3) und die erste Leiste (7) des zweiten Aufnahmeelements (4) zueinander im Wesentlichen parallele und gegenüberliegende Flächen (21) aufweisen, die einen Spalt (16) ausbilden.

2. Verbindungselement nach Anspruch 1, **dadurch gekennzeichnet, dass** die erste und/oder die zweite Leiste (7,8) des ersten und/oder des zweiten Aufnahmeelements (3,4) federnd angeordnet ist.

3. Verbindungselement nach Anspruch 1 oder 2, **dadurch gekennzeichnet, dass** die Basisplatte (2) eine Öffnung (13) aufweist.

4. Verbindungselement nach einem der Ansprüche 1 bis 3, **dadurch gekennzeichnet, dass** das zumindest das erste und/oder das zweite Aufnahmeelement (3,4) mit der Basisplatte (2) lösbar verbunden ist.

5. Verbindungselement nach einem der Ansprüche 1 bis 4, **dadurch gekennzeichnet, dass** die erste Leiste (7) und/oder die zweite Leiste (8) des ersten und/oder des zweiten Aufnahmeelements (3,4) eine Verbindungsnut (20) aufweist.

6. Verbindungselement nach einem der Ansprüche 1 bis 5, **dadurch gekennzeichnet, dass** die erste und/oder die zweite Leiste (7,8) des ersten und/oder des zweiten Aufnahmeelements (3,4) zumindest eine Öffnung (15) aufweist, die bevorzugt quer zum Verlauf der Aufnahmenut (9,10) angeordnet ist.

7. Verbindungselement nach einem der Ansprüche 1 bis 6, **dadurch gekennzeichnet, dass** ein drittes und ein viertes mit der Basisplatte (2) verbundenes Aufnahmeelement (5,6) vorgesehen sind, wobei die Leisten (7,8) der Aufnahmeelemente (3,4,5,6) sowie die Basisplatte (2) einen in der Ansicht von unten kreuzförmigen Hohlraum begrenzen.

8. Set, umfassend ein Verbindungselement nach einem der Ansprüche 1 bis 7, bei welchem zumindest eines der Aufnahmeelemente (3,4) mit der Basisplatte (2) lösbar verbindbar ist, wobei zumindest ein weiteres, mit der Basisplatte (2) verbindbares Verbindungsstück vorgesehen ist.

9. Set nach Anspruch 8, **dadurch gekennzeichnet, dass** ein Winkelelement (36) vorgesehen ist, welches an zwei Seiten mit einer Basisplatte (2) verbindbar ist.

10. Set nach Anspruch 8 oder 9, **dadurch gekennzeichnet, dass** eine Doppellasche (40) vorgesehen ist, welche ausgebildet ist, um zwei in einer Ebene liegende Basisplatten (2) derart miteinander zu verbinden, dass die Basisplatten (2) einander berühren.

11. Set nach Anspruch 8, 9 oder 10, **dadurch gekennzeichnet, dass** ein Seitenteil (41) vorgesehen ist, welches zwei parallele Laschen (30) aufweist, die jeweils ausgebildet sind, um mit einer Basisplatte (2) verbunden zu werden.

12. Set nach einem der Ansprüche 8 bis 11, **dadurch gekennzeichnet, dass** ein Befestigungsteil (42) vorgesehen, welches eine Lasche (30) zur Verbindung mit einer Basisplatte (2) sowie ein Befestigungselement (43) aufweist.

## Claims

1. Connecting element, comprising a base plate (2), at least a first receiving element (3) and at least a second receiving element (4), wherein the base plate (2) is connected to the first receiving element (3) and the second receiving element (4), wherein the first receiving element (3) and the second receiving element (4) each have a first strip (7) and a second strip (8), which are each arranged essentially perpendicular to the base plate (2), wherein the first and the second strip (7,8) of the first receiving element (3) and the base plate (2) delimit a first receiving groove (9), which is designed to receive a separating element (22), and the first and the second strip (7,8) of the second receiving element (4) and the base plate (2) delimit a second receiving groove (10) which is designed to receive a separating element (22), wherein the axis of the first receiving groove (9) and the axis of the second receiving groove (10) enclose an angle of approximately 90°, **characterized in that** the second strip (8) of the first receiving element (3) and the first strip (7) of the second receiving element (4) have opposing surfaces (21) that are substantially parallel to one another and form a gap (16).

2. Connecting element according to claim 1, **characterized in that** the first and/or the second strip (7,8) of the first and/or the second receiving element (3,4) are arranged in a resilient manner.

3. Connecting element according to claim 1 or 2, **characterized in that** the base plate (2) has one opening (13) .

4. Connecting element according to any one of claims 1 to 3, **characterized in that** at least the first and/or the second receiving element (3,4) is detachably connected to the base plate (2).

5. Connecting element according to any one of claims 1 to 4, **characterized in that** the first strip (7) and/or the second strip (8) of the first and/or the second receiving element (3,4) has a connecting groove (20).

6. Connecting element according to any one of claims 1 to 5, **characterized in that** the first and/or the second strip (7,8) of the first and/or the second receiving element (3,4) has at least one opening (15), which is preferably arranged transversely to the axis of the receiving groove (9,10).

7. Connecting element according to any one of claims 1 to 6, **characterized in that** a third and a fourth receiving element (5,6) are provided, which are connected to the base plate (2), wherein the strips (7,8) of the receiving elements (3,4,5,6) and the base plate (2) delimit a cavity which is cross-shaped in a view from below.

8. Set, comprising a connecting element according to any one of claims 1 to 7, in which at least one of the receiving elements (3,4) can be detachably connected to the base plate (2), with at least one additional connecting piece being provided which can be connected to the base plate (2).

9. Set according to claim 8, **characterized in that** an angle element (36) is provided, which can be connected to a base plate (2) on two sides.

10. Set according to claim 8 or 9, **characterized in that** a double tab (40) is provided, which is designed to connect two base plates (2) lying in one plane to one another in such a way that the base plates (2) touch one another.

11. Set according to claim 8,9 or 10, **characterized in that** a side part (41) is provided which has two parallel tabs (30) which are each designed to be connected to a base plate (2).

12. Set according to any one of claims 8 to 11, **characterized in that** a fastening part (42) is provided, which has a tab (30) for connection to a base plate (2) and a fastening element (43).

## Revendications

1. Élément de liaison, comprenant une plaque d'embase (2), au moins un premier élément de réception (3), ainsi qu'au moins un deuxième élément de réception (4), la plaque d'embase (2) étant reliée avec le premier élément de réception (3) et le deuxième élément de réception (4), le premier élément de réception (3) et le deuxième élément de réception (4) comportant chacun une première barre (7) et une deuxième barre (8), dont chacune est placée sensiblement à la perpendiculaire par rapport à la plaque d'embase (2), la première et la deuxième barres (7, 8) du premier élément de réception (3) et la plaque d'embase (2) délimitant une première rainure de réception (9) qui est conçue pour recevoir un élément de séparation (22) et la première et la deuxième barres (7,8) du deuxième élément de réception (4) et la plaque d'embase (2) délimitant une deuxième rainure de réception (10) qui est conçue pour recevoir un élément de séparation (22), l'axe de la première rainure de réception (9) et l'axe de la deuxième rainure de réception (10) incluant un angle d'environ 90 °, **caractérisé en ce que** la deuxième barre (8) du premier élément de réception (3) et la première barre (7) du deuxième élément de réception (4) comportent des surfaces (21) sensiblement parallèles et opposées les unes aux autres, qui constituent une fente (16).

2. Élément de liaison selon la revendication 1, **caractérisé en ce que** la première et / ou la deuxième barre (7,8) du premier et / ou du deuxième élément de réception (3,4) sont placées de manière élastique.

3. Élément de liaison selon la revendication 1 ou 2, **caractérisé en ce que** la plaque d'embase (2) comporte un orifice (13).

4. Élément de liaison selon l'une quelconque des revendications 1 à 3, **caractérisé en ce qu'**au moins le premier et / ou le deuxième élément de réception (3,4) sont reliés de manière amovible avec la plaque d'embase (2).

5. Élément de liaison selon l'une quelconque des revendications 1 à 4, **caractérisé en ce que** la première barre (7) et / ou la deuxième barre (8) du premier et / ou du deuxième élément de réception (3,4) comporte une rainure de liaison (20).

6. Élément de liaison selon l'une quelconque des revendications 1 à 5, **caractérisé en ce que** la première et / ou la deuxième barre (7,8) du premier et / ou du deuxième élément de réception (3,4) comporte au moins un orifice (15), qui est placé de préférence à la transversale du trajet de la rainure de réception (9,10).

7. Élément de liaison selon l'une quelconque des revendications 1 à 6, **caractérisé en ce qu'**un troisième et un quatrième élément de réception (5, 6) reliés avec la plaque d'embase (2) sont prévus, les barres (7,8) des éléments de réception (3, 4, 5, 6), ainsi que la plaque d'embase (2) délimitant une cavité cruciforme dans la vue par le dessous.

8. Kit, comprenant un élément de liaison selon l'une quelconque des revendications 1 à 7, sur lequel au moins l'un des éléments de réception (3,4) est susceptible d'être relié de manière amovible avec la plaque d'embase (2), au moins une autre pièce de liaison susceptible d'être reliée avec la plaque d'embase (2) étant prévue.

9. Kit selon la revendication 8, **caractérisé en ce qu'**il est prévu un élément angulaire (36) qui sur deux côtés, est susceptible d'être relié avec un plaque d'embase (2).

10. Kit selon la revendication 8 ou 9, **caractérisé en ce qu'**il est prévu une double-patte (40), laquelle est conçue pour relier l'une avec l'autre deux plaques d'embase (2) situées dans un plan, de telle sorte que les plaques d'embase (2) se touchent mutuellement.

11. Kit selon la revendication 8, 9 ou 10, **caractérisé en ce qu'**il est prévu une partie latérale (41), laquelle comporte deux pattes (30) parallèles, dont chacune est conçue pour être reliée avec une plaque d'embase (2).

12. Kit selon l'une quelconque des revendications 8 à 11, **caractérisé en ce qu'**il est prévu une pièce de fixation (42), laquelle comporte une patte (30), destinée à être reliée avec une plaque d'embase (2), ainsi qu'un élément de fixation (43).
